# EUROPEAN PATENT APPLICATION

(11) **EP 1 553 744 A1**
(43) Date of publication of application: **13.07.2005**
(21) Application number: 04290048.0
(22) Date of filing: 08.01.2004
(51) Int. Cl.: H04L 29/06, H04L 12/56, H04L 12/46

(54) **Communication network comprising at least one virtual switch and terminal acting as such a virtual switch**

(71) Applicant: ALCATEL, 75008 Paris (FR)
(72) Inventor: Gass, Raymond, 67150 Bolsenheim (FR)
(74) Representative: Rausch, Gabriele, Dr.

(57) **Abstract**

The present invention concerns a communication network based on a physical local area network (LAN), including one or several dedicated switching units, and on at least two virtual local area networks (VLAN), said communication network further comprising at least one terminal having several connection ports or sockets, one of them or primary port or socket being linked to a switching unit of the local area network and at least one other or secondary port or socket being linked to an other terminal or similar equipment.

Network characterised in that said at least one terminal (3, 3') constitutes a virtual switch able to differentiate data according to their nature, priority level and/or originated VLAN, in that different priority levels are affected to the possible various secondary ports or sockets according to the VLAN the respectively connected terminal or equipment (4, 4', 4") belongs to, and in that the at least one terminal (3, 3') acting as a virtual switch and its corresponding switching unit (2) are mutually connected over a hybrid communication link (6) able to support and handle different VLANs, different priority levels and different types of data.

## Description

The present invention is related to the fields of configuration and management of networks, especially Local Area Networks (LAN), in particular supporting Virtual Local Area Networks (VLAN), and concerns a communication network based on a LAN and associated VLANs and an communication terminal used as a virtual switch in such a network.

Local Area Networks as such, their constitution, their components, their configuration and their control, are well known in the state of the art.

IEEE Standard 802.1Q has introduced the concept of VLAN, with ports belonging to one VLAN, and VLAN managed by switches, with trunking of multiple VLAN between switches. Real-time application, such as IP telephony, have increased the practice of using priority tagging associated to VLAN trunking.

Now, a first problem arises when different applications running on the same equipment are willing to handle different priority, on different VLANs, with IP source addresses that are different. Indeed, there are difficulties to get different IP addresses and different VLAN Ids, since no standard protocol has been defined yet for achieving this from a single port.

Furthermore, other problems may arise with switches that handle VLANs and tagging by their own, denying that capability to port based equipment.

In order to try to solve the problem of defining the VLAN Ids, in particular for IP phones, proprietary protocols (layer 2 protocols) have been proposed, such as for example the protocol known as CDP (Cisco Discovery Protocol).

Nevertheless, the aforementioned already proposed solutions have several drawbacks. So, these known solutions are not generic and they do not cover the case of multiple VLAN Ids behind a simple port. Moreover, these known solutions are not compatible with authoritarian switches, i.e. switches which tag automatically, whatever happened before.

It is therefore a main aim of the present invention to solve the aforementioned drawbacks and to propose a complete solution providing sharing and configuration.

To that end, the present invention concerns a communication network based on a physical local area network (LAN), including one or several dedicated switching units, and on at least two virtual local area networks (VLAN), said communication network further comprising at least one terminal having several connection ports or sockets, one of them or primary port or socket being linked to a switching unit of the local area network and at least one other or secondary port or socket being linked to an other terminal or similar equipment, characterised in that said at least one terminal constitutes a virtual switch able to differentiate data according to their nature, priority level and/or originated VLAN, in that different priority levels are allocated to the possible various secondary ports or sockets according to the VLAN the respectively connected terminal or equipment belongs to, and in that the at least one terminal acting as a virtual switch and its corresponding switching unit are mutually connected over a hybrid communication link able to support and handle different VLANs, different priority levels and different types of data.

The invention also encompasses a communication terminal provided with several ports or sockets for its connection to at least one other terminal or similar equipment and to a switching unit of a Local Area Network (LAN), characterised in that said terminal comprises means allowing it to act as a virtual switch able to differentiate data passing through it according to their nature, priority level and/or originated VLAN, in that different priority levels can be allocated to the port(s) or socket(s) linked to the other terminal(s) or similar equipment according to the VLAN the latter(s) belong(s) to and in that it is able to connect with the switching unit of the LAN over a hybrid communication link able to support and handle different VLANs, different priority levels and different types of data.

The invention will be better understood thanks to the following description and drawings of embodiments of said invention given as non-limitative examples thereof.

In the accompanying drawings:

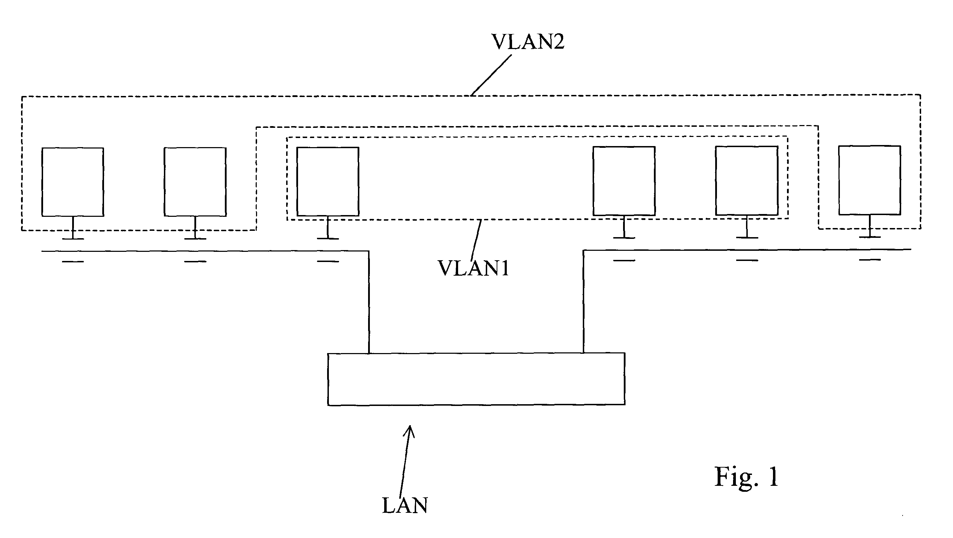

Figure 1 is a symbolic representation of a LAN associated with two VLANs;
Figure 2 is a schematical representation of a network with LAN and VLAN according to the state of the art;
Figure 3 is a schematical representation of a network with LAN and VLANs according to the invention, and,
Figure 4 is an other type of schematical representation of a network according to the invention.

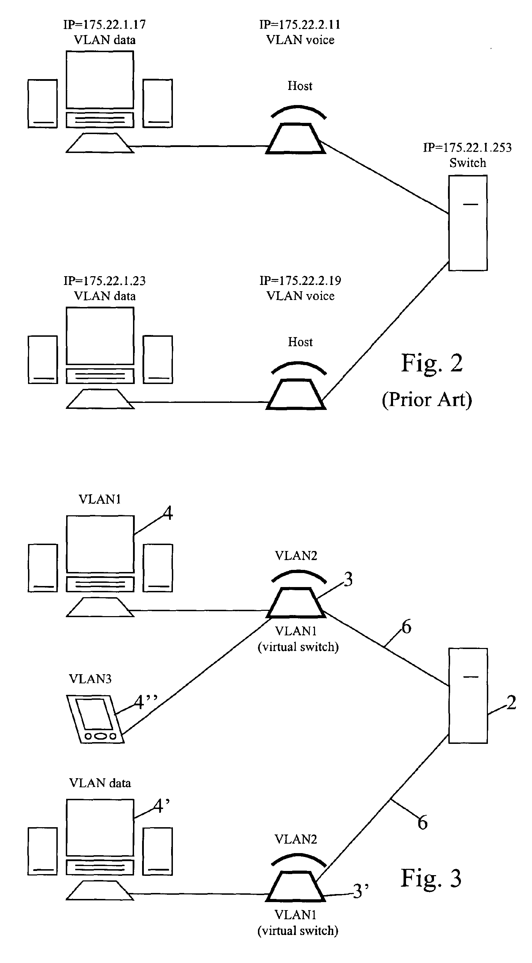

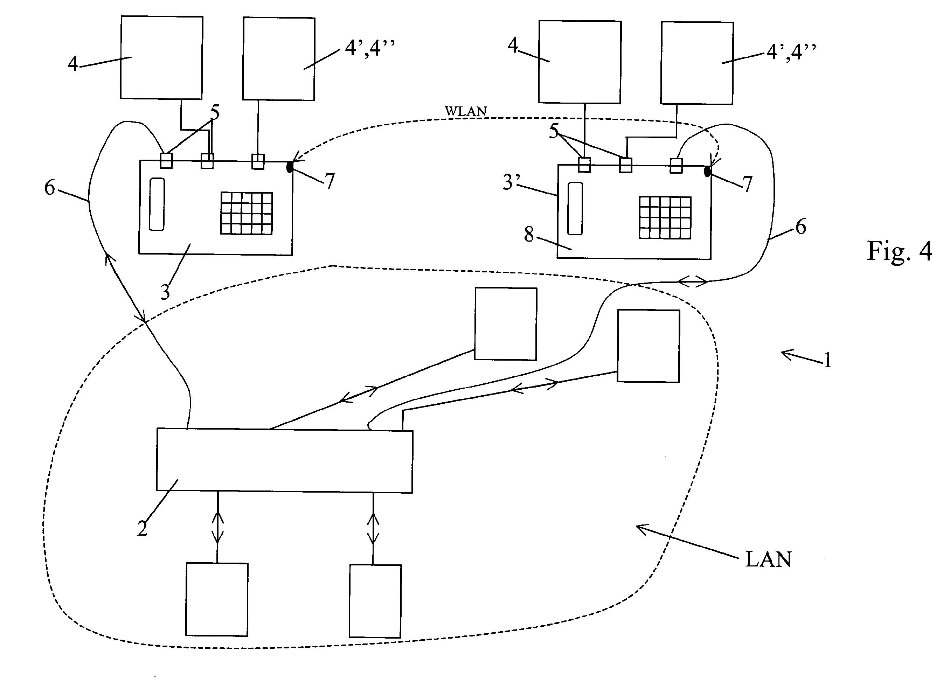

As shown on figures 3 and 4 of the drawings, the communication network 1 is based on a physical local area network (LAN), including one or several dedicated switching units 2, and on at least two virtual local area networks (VLAN), said communication network 1 further comprising at least one terminal 3, 3' having several connection ports or sockets 5, one of them or primary port or socket being linked to a switching unit 2 of the LAN and at least one other or secondary port or socket being linked to an other terminal or similar equipment 4, 4', 4".

According to the invention, said at least in that said at least one terminal 3, 3' constitutes a virtual switch able to differentiate data according to their nature, priority level and/or originated VLAN. In addition, different priority levels are allocated to the possible various secondary ports or sockets 5 according to the VLAN the respectively connected terminal or equipment 4, 4', 4" belongs to, and the at least one terminal 3, 3' acting as a virtual switch and its corresponding switching unit 2 are mutually connected over a hybrid communication link 6 able to support and handle different VLANs, different priority levels and different types of data.

Preferably, the switch function fulfilled by the at least one terminal 3, 3' acting as a virtual switch enables said terminal 3, 3' to handle different VLANs, different MAC addresses and different IP addresses.

In connection with a preferred embodiment of the invention and as shown on figures 3 and 4, the at least one switching unit 2 belonging to the LAN is connected to at least two terminals 3, 3' acting as virtual switches and the at least one terminal 3, 3' acting as a virtual switch enables said terminal 3, 3' to handle different VLANs, different MAC addresses and different IP addresses.

According to a feature of the invention, the at least one terminal 3, 3' acting as a virtual switch integrates software means allowing said terminal to distinguish voice from data and to perform and interpret priority tagging and configuration signalling.

Such software means are known or can be easily derived from the state of the art by a person skilled in the art, and do not need to be further described herein.

Advantageously, the global configuration of the network 1 is achieved through Simple Network Management Protocol (SNMP) and the local or neighbourhood configuration is performed by means of GARP VLAN Registration Protocol (GVRP) (GARP = Generic Attribute Registration Protocol).

In connection with a further additional feature of the invention, shown on figure 4 of the drawings, the at least one terminal 3, 3' acting as a virtual switch can integrate a supplementary port 7, for example a wireless communication interface, allowing it to connect to at least one other terminal 8 also acting as a virtual switch.

The present invention also concerns, for example as part of a communication network 1 as described before, a communication terminal 3, 3' provided with several ports or sockets 5 for its connection to at least one other terminal or similar equipment 4, 4', 4" and to a switching unit 2 of a Local Area Network (LAN).

Said terminal 3, 3' comprises means allowing it to act as a virtual switch able to differentiate data passing through it according to their nature, priority level and/or originated VLAN. Furthermore, different priority levels can be allocated to the port(s) or socket(s) 5 linked to the other terminal(s) or similar equipment 4, 4', 4" according to the VLAN the latter(s) belong(s) to and said terminal 3, 3' is able to connect with the switching unit 2 of the LAN over a hybrid communication link 6 able to support and handle different VLANs, different priority levels and different types of data.

Preferably, said at least one terminal 3, 3' acting as a virtual switch consists of an Internet Protocol phone and integrates software means allowing said terminal to distinguish voice from data and to perform and interpret priority tagging and configuration signalling.

So, the present invention proposes, in comparison with the state of the art as shown on figure 2, a shift of roles by introducing a virtual switch. The resulting smart switch function allows the concerned terminal 3, 3' to handle different VLANs, different MAC addresses and different IP addresses. Said virtual switch participates to the switching functions operative throughout the network 1 and exchanges configuration information by way of the GVRP.

The solution proposed by the invention solves the problems seen from the switching unit 2 of the LAN, i.e. no more problem to receive from different MAC and IP addresses, with different VLAN Ids. This latter case can occur when one of the connected terminal 4, 4', 4" (for example a PC) is running different applications with different priorities or when said connected terminal 4, 4', 4" or the terminal 3, 3' acting as a virtual switch is welcoming other external equipment, e.g. through WLAN (Wireless LAN) or Bluetooth.

The virtual switch of the present invention may handle as many different physical ports as needed. On the example shown on figure 3, it has its own address on VLAN 1, for the management of the overall communication network 1.

The present invention is, of course, not limited to the preferred embodiments described and represented herein, changes can be made or equivalents used without departing from the scope of the invention.

## Claims

1. Communication network based on a physical local area network (LAN), including one or several dedicated switching units, and on at least two virtual local area networks (VLAN), said communication network further comprising at least one terminal having several connection ports or sockets, one of them or primary port or socket being linked to a switching unit of the LAN and at least one other or secondary port or socket being linked to an other terminal or similar equipment, **characterised in that** said at least one terminal (3, 3') constitutes a virtual switch able to differentiate data according to their nature, priority level and/or originated VLAN, **in that** different priority levels are allocated to the possible various secondary ports or sockets (5) according to the VLAN the respectively connected terminal or equipment (4, 4', 4") belongs to, and **in that** the at least one terminal (3, 3') acting as a virtual switch and its corresponding switching unit (2) are mutually connected over a hybrid communication link (6) able to support and handle different VLANs, different priority levels and different types of data.

2. Communication network according to claim 1, **characterised in that** the switch function fulfilled by the at least one terminal (3, 3') acting as a virtual switch enables said terminal (3, 3') to handle different VLANs, different MAC addresses and different IP addresses.

3. Communication network according to claim 1 or 2, **characterised in that** the at least one terminal (3, 3') acting as a virtual switch consists of an Internet Protocol phone.

4. Communication network according to anyone of claims 1 to 3, **characterised in that** the at least one terminal (3, 3') acting as a virtual switch integrates software means allowing said terminal to distinguish voice from data and to perform and interpret priority tagging and configuration signalling.

5. Communication network according to anyone of claims 1 to 4, **characterised in that** at least one switching unit (2) belonging to the LAN is connected to at least two terminals (3, 3') acting as virtual switches.

6. Communication network according to anyone of claims 1 to 5, **characterised in that** the global configuration of the network (1) is achieved through Simple Network Management Protocol (SNMP) and **in that** the local or neighbourhood configuration is performed by means of GARP VLAN Registration Protocol (GVRP).

7. Communication network according to anyone of claims 1 to 6, **characterised in that** the at least one terminal (3, 3') acting as a virtual switch integrates a supplementary port (7), for example a wireless communication interface, allowing it to connect to at least one other terminal (8) also acting as a virtual switch.

8. Communication terminal provided with several ports or sockets for its connection to at least one other terminal or similar equipment and to a switching unit of a Local Area Network (LAN), **characterised in that** said terminal (3, 3') comprises means allowing it to act as a virtual switch able to differentiate data passing through it according to their nature, priority level and/or originated VLAN, **in that** different priority levels can be allocated to the port(s) or socket(s) (5) linked to the other terminal(s) or similar equipment (4, 4', 4") according to the VLAN the latter(s) belong(s) to and **in that** it is able to connect with the switching unit (2) of the LAN over a hybrid communication link (6) able to support and handle different VLANs, different priority levels and different types of data.

9. Communication terminal according to claim 8, **characterised in that** the at least one terminal (3, 3') acting as a virtual switch consists of an Internet Protocol phone.

10. Communication terminal according to claim 8 or 9, **characterised in that** it integrates software means allowing said terminal to distinguish voice from data and to perform and interpret priority tagging and configuration signalling.

11. Communication terminal according to anyone of claims 8 to 10, **characterised in that** it is part of a communication network (1) according to anyone of claims 1 to 7.

## Amended claims

### Amended claims in accordance with Rule 86(2) EPC.

**1.** Communication network based on a physical local area network (LAN), including one or several dedicated switching units, and on at least two virtual local area networks (VLAN), said communication network further comprising at least one terminal having several connection ports or sockets, one of them or primary port or socket being linked to a switching unit of the LAN and at least one other or secondary port or socket being linked to an other terminal or similar equipment, **characterised in that** said at least one terminal (3, 3') being part of at least one of the VLAN, constitutes a virtual switch able to differentiate data according to their nature, priority level and/or originated VLAN, **in that** different priority levels are allocated to the possible various secondary ports or sockets (5) according to the VLAN the respectively connected terminal or equipment (4, 4', 4") belongs to, and **in that** the at least one terminal (3, 3') acting as a virtual switch and its corresponding switching unit (2) are mutually connected over a hybrid communication link (6) able to support and handle different VLANs, different priority levels and different types of data.

**8.** Communication terminal provided with several ports or sockets for its connection to at least one other terminal or similar equipment and to a switching unit of a Local Area Network (LAN), **characterised in that** said terminal (3, 3') being part of at least one of a virtual local area networks (VLAN), comprises means allowing it to act as a virtual switch able to differentiate data passing through it according to their nature, priority level and/or originated VLAN, **in that** different priority levels can be allocated to the port(s) or socket(s) (5) linked to the other terminal(s) or similar equipment (4, 4', 4") according to the VLAN the latter(s) belong(s) to and **in that** it is able to connect with the switching unit (2) of the LAN over a hybrid communication link (6) able to support and handle different VLANs, different priority levels and different types of data.
